(19) Europäisches Patentamt
European Patent Office
Office européen des brevets

(11) **EP 0 509 037 B1**

(12) **EUROPEAN PATENT SPECIFICATION**

(45) Date of publication and mention
of the grant of the patent:
**25.08.1999  Bulletin 1999/34**

(21) Application number: **91902538.7**

(22) Date of filing: **03.01.1991**

(51) Int Cl.⁶: **H04B 1/74**, H04M 11/06

(86) International application number:
**PCT/US91/00060**

(87) International publication number:
**WO 91/10308 (11.07.1991 Gazette 1991/15)**

(54) **AUTOMATIC DATA RESTORAL FOR MODEMS**

AUTOMATISCHE DATENWIEDERHERSTELLUNG FÜR MODEMS

RETABLISSEMENT AUTOMATIQUE DE DONNEES POUR MODEMS

(84) Designated Contracting States:
**BE DE FR GB**

(30) Priority: **04.01.1990  US 460780**

(43) Date of publication of application:
**21.10.1992   Bulletin 1992/43**

(73) Proprietor: **MOTOROLA INC.**
**Schaumburg, IL 60196-3750 (US)**

(72) Inventors:
• **SCHROEDER, Stephen**
**Stoughton, MA 02072 (US)**

• **SRIDHAR, Manickam, R.**
**Norton, MA 02766 (US)**

(74) Representative: **Hudson, Peter David**
**Motorola,**
**European Intellectual Property,**
**Midpoint,**
**Alencon Link**
**Basingstoke, Hampshire RG21 7PL (GB)**

(56) References cited:
**EP-A- 0 332 792**          **US-A- 4 076 961**
**US-A- 4 716 582**          **US-A- 4 910 763**

**Description**

Background of the Invention

This invention relates to restoral of data transmission between modems by switching transmission from a degraded line to a functioning line.

Modems often transmit data over leased lines, particularly when transmission is at high bit rates. When such lines fail or degrade, it is known to provide an alarm indication, and to provide the operator with a means for manually switching transmission, temporarily, from the leased line to a dial line (i.e., a Public Switched Telephone Network, or PSTN, line). Some modems have had the capability of automatically switching to a dial line upon loss of the data carrier on the leased lines.

United States patent 4076961 discloses an automatic switching unit for connection of a modem at a remote site in a data communication network. The switching unit normally connects the modem to a primary data transmission path. If the primary path malfunctions a secondary transmission path is established. Once the primary path has been repaired the communication then continues on the primary path.

European patent application 0332792 discloses a switching circuit for switching communication between two modems from a leased line to the public switched network.

United States patent 4716582 discloses a monitoring device which communicates over telephone lines.

Summary of the Invention

In a first aspect of the invention there is provided a method for automatically switching data paths between modems in accordance with claim 1.

In a second aspect of the invention provides a system for automatically switching data transmission paths between modems in accordance with claim 5.

In preferred embodiments, the dial line connections are maintained (by supplying energy to the lines) for a prescribed period, in order to have the lines available in the event that degradation of the leased line recurs.

Other advantages and features will become apparent from the following description of the preferred embodiment and from the claims.

Description of the Preferred Embodiment

Fig. 1 is a block diagram of a typical modem installation for carrying out automatic data restoral;
Fig. 2 is a block diagram of the calling unit and the answering unit shown in Fig. 1;
Fig. 3 is a flow chart of the restoral procedure implemented by the calling unit; and
Fig. 4 is a flow chart of the restoral procedure implemented by the answering unit.

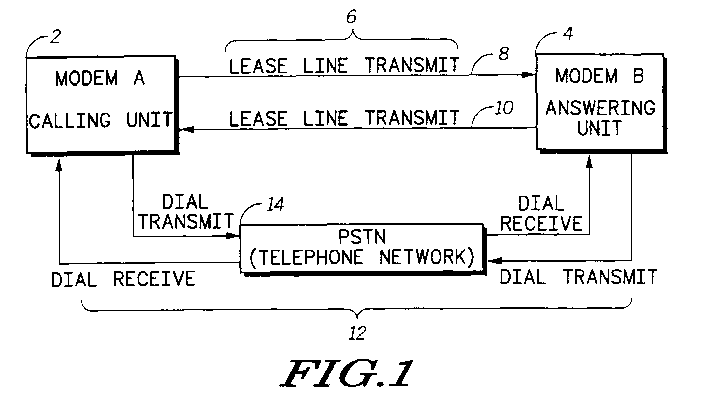

Referring to Fig. 1, a calling unit or modem 2 initially establishes data communication with an answering unit or modem 4 over a leased connection 6, which may consist of one or two lines depending upon the modulation mode selected for data communications. If a two-line connection is called for, calling unit 2 transmits data to answering unit 4 over a transmit leased line 8 and receives communications from answering unit 4 over a receive leased line 10. If single line connection is called for, then calling unit 2 and answering unit 4 both transmit and receive data over leased line 8.

Both calling unit 2 and answering unit 4 are equipped to detect when the quality of either one or both of leased lines 8 and 10 have degraded sufficiently to impair data communications. When such line degradation has been detected, calling unit 2 restores reliable data communication by establishing a dial connection 12 with answering unit 4 through the public switch telephone network (PSTN) 14. After dial connection 12 has been established, calling unit 2 then causes data communications to be switched onto dial connection 12 until such time as the quality of leased connection 6 returns to a level capable of reliable data transmission. Depending upon the modulation mode selected for communication over dial connection 6, either one or two dial lines may be used. Once calling unit 2 determines that the quality of leased connection 6 has returned to an acceptable level, it causes subsequent data communications both to and from answering unit 4 to be switched back onto leased connection 6.

Both calling unit 2 and answering unit 4 include the same internal circuitry. Thus it should be understood that the following description, except where explicitly noted, applies to both units 2 and 4.

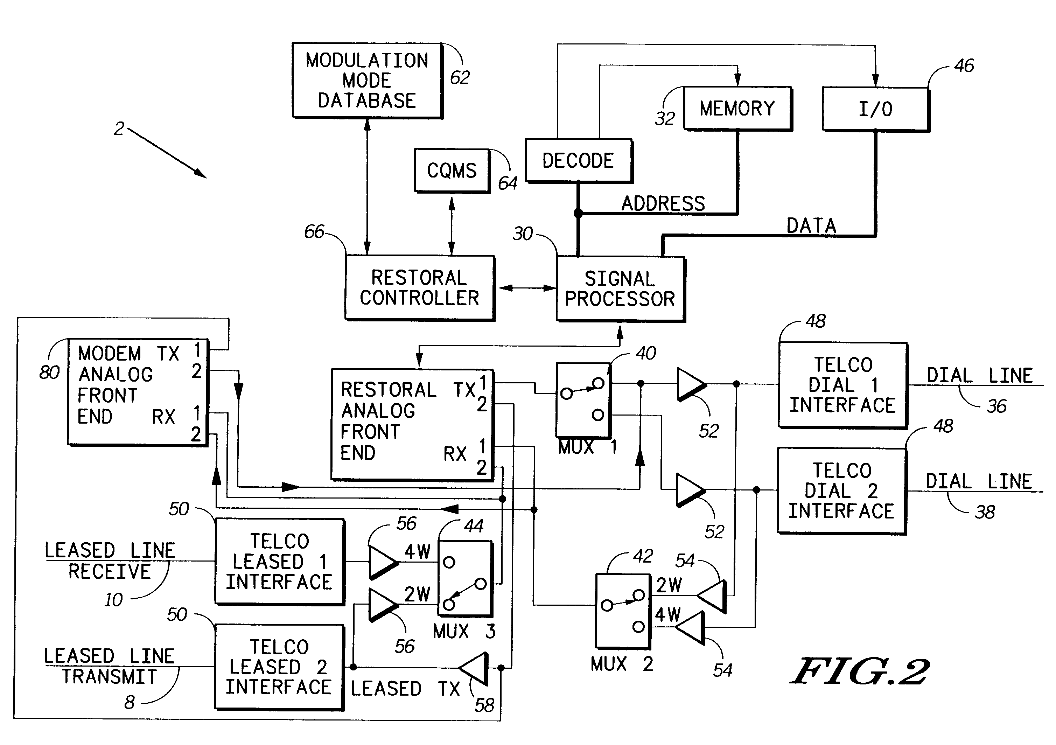

As shown in Fig. 2, calling unit 2 includes a signal processor 30 and associated memory 32 for performing all calling, dial line qualification, and leased line testing performed by the modem. Connected to signal processor 30 is a restoral analog front end 34 which includes two output lines, designated TX1 and TX2, and two input lines, designated RX1 and RX2. Restoral analog front end 34 converts digital signals from signal processor 30 into analog signals that are made available over the appropriate one of its two output lines, TX1 and TX2, and it converts analog signals received at over its input lines, RX1 and RX2, into digital signals that are sent to signal processor 30.

On the output side of analog front end 34, output line TX1 carries signals that are to be sent out over one of two dial lines, namely, dial line 35 or dial line 38, and output line TX2 carries signals which are to be sent out over transmit leased line 8. A multiplexer 40 selects which of the two dial lines 36 or 38 receives the signal on output line TX1. On the input side of analog front end 34, input line RX1 carries signals that are received at the modem over one of the two dial lines 36 or 38, and input line RX2 carries signals that are received at the modem over either transmit leased line 8 or receive leased line 10, depending upon whether the selected modulation mode is either single line or two line, respectively.

Calling unit 2 also includes a modem analog front end 80 which handles all actual data communications to and from the modem. Modem analog front end 80 also includes two output lines, designated TX1 and TX2, and two input lines, designated RX1 and RX2.

On the output side of modem analog front end 80, output line TX1 carries signals that are to be sent out over leased line 8; whereas, output line TX2 carries signals that are to be sent out over dial line 36. On the input side of modem analog front end 80, input line RX1 carries signals that are received at the modem over either transmit leased line 8 or receive leased line 10, depending upon whether the selected modulation mode is either single line or two line, respectively, and input line RX2 carries signals that are received at the modem over one of the two dial lines 36 or 38.

A multiplexer 42 selects which of the two dial lines 36 or 38 supply the signal to input line RX1 of analog front end 34 and to input line RX2 of modem analog front end 80. And a multiplexer 44 selects which of the two leased lines 8 or 10 supply the signal to input line RX2 of analog modem 34 and to input line RX1 of modem analog front end 80. Multiplexers 40, 42 and 44 are, in turn, controlled by an input/output (I/O) module 46 which responds to commands from signal processor 30 controls.

Calling unit 2 interfaces with each of dial lines 36 and 38 through a corresponding standard dial line interface circuit 48 and it interfaces with each of leased lines 8 and 10 through a corresponding standard leased line interface circuit 50. Conventional amplifiers 52 and 58 amplify the communication signals before they pass to interface circuits 48 and 50 for transmission over their respective lines. And, 2-to-4 wire converters 54 and 56 (also referred to as hybrids) process the communication signals that are received through interface circuits 48 and 50.

Within calling unit 2, there is a modulation mode database 62 containing all modulation mode characteristics for all modulation modes available in the modem. Thus, unique modulation modes can be selected for leased and for dial operation.

Control of the restoral features of calling unit 2 primarily resides in a circuit quality monitoring system (CQMS) 64 and a restoral controller 66. CQMS 64 monitors the quality of the modem's transmission facilities (which may be either leased connection 6 or dial connection 12 depending upon which connection was selected for data transmissions) to determine whether a resynchronization or retraining of the modem line is required. CQMS 64 may employ any one or more of a variety of line quality measuring techniques to evaluate the quality of the line and decide whether to call for a retraining of the line. For example, among such techniques which may be employed by CQMS 64 are those described in U.S. Patent 4,756,007 to Qureshi et al. dated July 5, 1988 and in copending European Patent Application EPO446276 falling under article 54(3) EPC.

CQMS 64 also generates status information about the data transmission facilities such as whether data carrier is present on the line and the number of synchronization sequences (i.e., retrains) which have been transmitted and received during the past fifteen minutes. In the case of data communications over leased lines 8 or 10, when CQMS 64 detects that the leased line carrier has been lost for at least fifteen seconds or that 10 retrain sequences have been received within the last fifteen minutes, it causes restoral controller 66 in calling unit 2 to initiate a restoral backup of the leased line(s), i.e., it causes a dial line connection to be established.

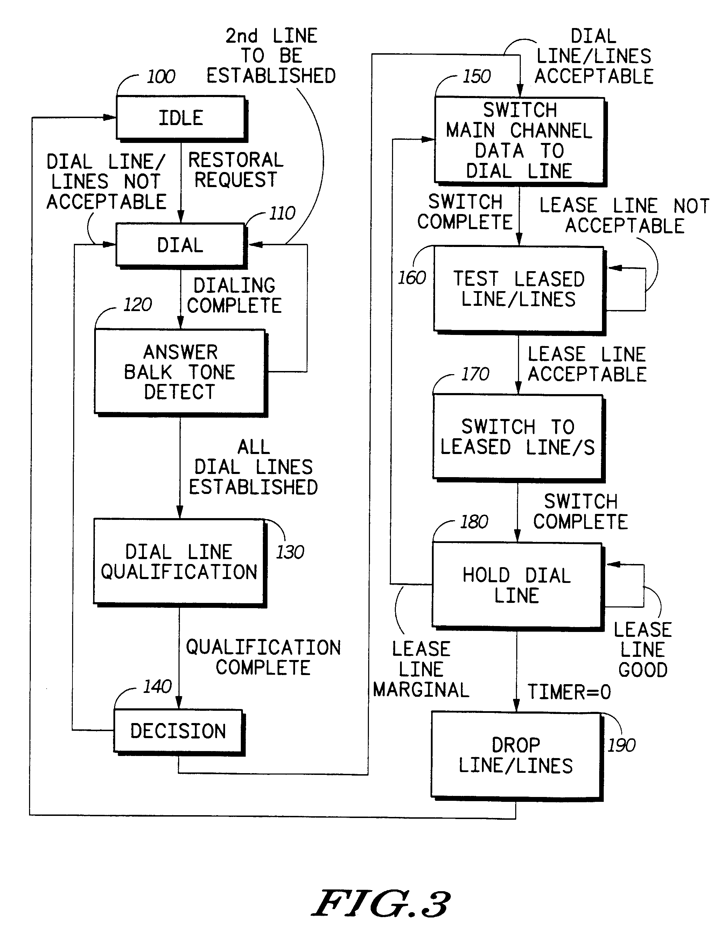

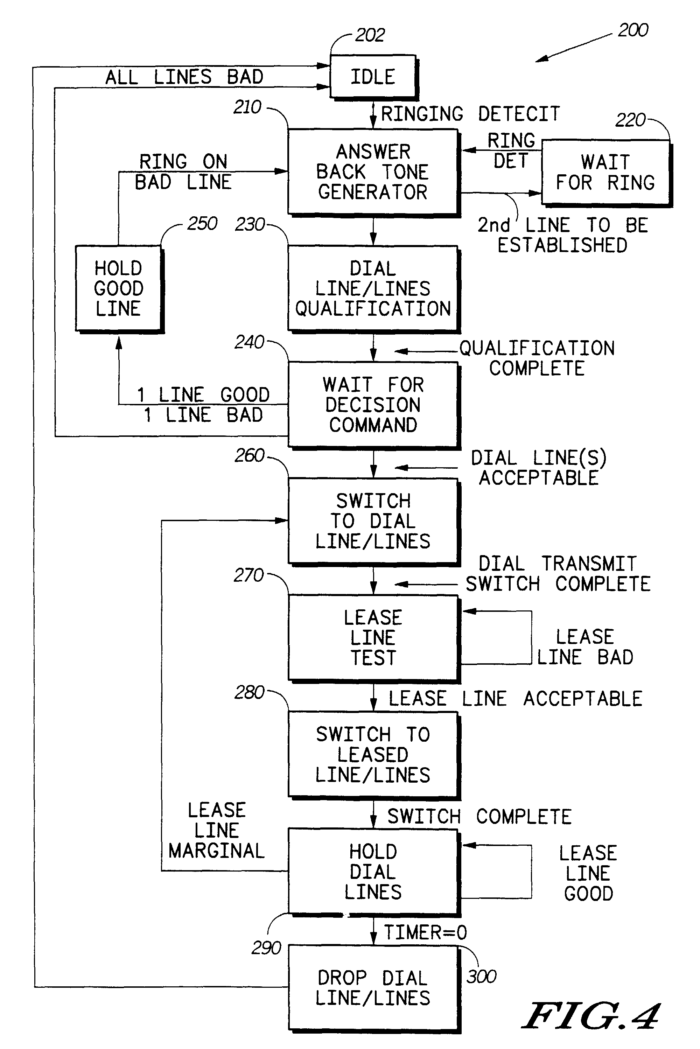

During a restoral backup, calling unit 2 implements a calling unit restoral protocol 100, as shown in Fig. 3, and concurrently answering unit 4 implements an answering unit restoral protocol 200, as shown in Fig. 4.

Referring first to Fig. 3, before any restoral backup has been requested, restoral controller 66 in calling unit 2 is in an idle state waiting to receive a restoral backup request from CQMS 64 (step 102). Upon receiving a restoral backup request, restoral controller 66 accesses modulation mode data base 62 to determine whether a single or dual line modulation mode is to be operated on the dial line(s). In the case of dual line modulation modes, restoral controller 66 in calling unit 2 forces its restoral circuitry to switch its transmit and receive paths to the particular dial line selected by the user to be called first. In other words, I/O 46 causes multiplexers 40 and 42 to both select the same one of dial lines 36 or 38 for transmitting data to answering unit 4 and for receiving data from answering unit 4.

Then, restoral controller 66 instructs signal processor 30 to establish a dial connection to answering unit 4. The process of establishing a dial connection involves dialing a pre-stored phone number for a first dial line while monitoring call progress signals provided by the public switched telephone network (step 110) and then detecting an answer back tone from answer unit 4 indicating that the connection has been established (step 120). After signal processor 30 determines that the first dial line has been established, restoral controller 66 forces its restoral circuitry to switch its transmit and receive paths to the second dial line and then instructs signal processor 30 to establish a second dial connection to answering unit 4. Thus, the above-described steps 110 and 120 are repeated for the second dial line.

In the meantime, restoral controller 66 in the answering unit 4, which is capable of answering calls on either dial line in any order, is also in an idle state waiting to detect a ringing signal on any one of its dial lines (step 202). Upon detecting a ring signal on the first dial line, restoral controller 66 in answer.ng unit 4 forces its restoral circuitry to switch its transmit path to that dial line and it then instructs its signal processor 30 to transmit answer back tone to calling unit 2 (step 210). After transmitting its answer back tone for at least three seconds, its restoral controller 66 will then wait for ringing to be detected on the second line (step 220). Upon detecting ring on the second dial line, restoral controller 66 in answering unit 4 forces its restoral circuitry to switch its transmit path to the second dial line and instructs its signal processor 30 to transmit an answer back tone to calling unit 2 for at least three seconds.

In the case of single line modulation modes, restoral controller 66 in calling unit 2 forces its restoral circuitry to switch its transmit and receive paths to dial line 36. Restoral controller 66 then instructs signal processor 30 to establish a dial connection to the answering unit 4. Upon detecting ring on the dial line, restoral controller 66 in answering unit 4 forces its restoral circuitry to switch its transmit path to that dial line and instructs its signal processor 30 to transmit an answer back tone to calling unit 2. After transmitting answer back tone for at least three seconds, its restoral controller 66 will not wait for ringing to be detected on the second line.

After the appropriate dial connection(s) have been established, calling unit 2 and answering unit 4 both determine whether the dial line (or lines) can support the bit rate selected by the user (step 130 in Fig. 3 and step 230 in Fig. 4). In the case of dual line modulation modes, restoral controller 66 in calling unit 2 and restoral controller 66 in answering unit 4 each forces its respective restoral circuitry to switch its transmit path to dial line 36 and its receive path to dial line 38. In the case of single line modulation modes, restoral controller 66 in calling unit 2 and restoral controller 66 in answering unit 4 both force their restoral circuitry to switch both their transmit and receive paths to dial line 36.

In both cases, after the transmit and receive paths have been switched, restoral controllers 66 in both calling unit 2 and answering unit 4 instruct their signal processors 30 to transmit and receive line probe signals. Analysis of the received line probe signals provides channel shaping and noise spectrum information. When restoral controller 66 instructs its signal processor 30 to transmit and receive line probing signals, imbedded in the process is the exchange of analysis data between calling and answering units 2 and 4. The exchange of data is done using a DPSK modulation scheme.

Details of the line probing process are fully described in copending European Patent Application EPO397535 falling under article 54(3) EPC.

In general, calling unit 2 includes a probing signal generator which generates a special probing signal sequence $x_1(n)$, and a line probing processor which measures the quality of channel A (i.e., the receive line). Likewise, answering unit 4 includes a corresponding probing signal generator, which generates a probing signal sequence $x_2(n)$, and a line probing processor which measures the quality of channel B (i.e., the transmit line). Both the probing signal generator and the line probing processor in each modem are implemented by signal processor 30 through software.

Calling unit 2 sends its probing signal sequence $x_1(n)$ to the line probing processor of answering unit 4, which uses the corresponding received signal to compute the signal-to-noise ratio (SNR) for channel A as a function of frequency, i.e. $SNR_A(f)$. Similarly, answering unit 4 sends its probing sequence $x_2(n)$ to the line probing processor of calling unit 2, which uses the corresponding received signal to compute the signal-to-noise ratio (SNR) for channel B as a function of frequency, i.e., $SNR_B(f)$.

The probing sequences $x_1(n)$ and $x_2(n)$ are periodic signals selected to fully and uniformly estimate the entire channel over the spectrum of frequencies which may be useful for data communication. One such sequence consists of a group of equal amplitude tones which are evenly spaced within the frequency band of interest, namely, 100 to 3600 Hz. It is desirable to select the phases of these tones so as to yield a relatively small peak-to-average ratio of the transmitted signal thereby reducing the possibility of driving the channel beyond its region of normal operation. The following is an example of one such probing sequence which satisfies these criteria:

$$x(n) = A \sum_{k_1}^{k_2} \cos(2\pi k f_\Delta n T_s + \phi_k), \quad n = 0, 1, \ldots, P-1$$

$$\phi_k = \pi(k-k_1)^2/(k_2-k_1)$$

where

A is a scaling constant;
n is a sampling interval index;
$f_\Delta$ is the frequency resolution;
k is a frequency interval index;
$k_1$ specifies the lowest frequency index included in the sequence;
$k_2$ specifies the highest frequency index included in the sequence;
$T_s$ equals $1/f_s$ where $f_s$ is the sampling rate; and
P equals $f_s/f_\Delta$, the number of samples in one period of the line probing signal.

In the embodiment described herein, the sampling rate is 9600 Hz, P equals 256, the frequency resolution $f_\Delta$ is 37.5 Hz, $k_1$ equals 3 and $k_2$ equals 96 (i.e., covering a frequency range from 112.5 to 3600 Hz).

The line probing processors employ the Fast Fourier Transform (FFT) technique to compute the SNR(f) for their respective channels. They determine SNR(f) by measuring the frequency response, H(f), and the noise power spectral density, $\Phi$(f), of the channel at the discrete frequencies excited by the probing signal, i.e. $kf_\Delta$, where $k=k_1$... $k_2$. Then, the line probing processors compute the SNR(f) by using the following well-know relationship:

$$SNR(f) = |H(f)|^2/\Phi(f)$$

Line probing data is then derived from this measure of SNR(f), and in the case of answering unit 4, that data is transmitted to calling unit 2.

When signal processor 30 in calling unit 2 indicates to its restoral controller 66 that it has completed line probing of the dial line(s), restoral controller 66 in calling unit 2 uses the line probing data from calling and answering units 2 and 4 to determine if the dial line(s) can support the bit rate selected by the user (step 140).

In answering unit 4, when line probing is complete, restoral controller 66 waits for a command from calling unit 2 (step 240). Commands and responses sent between restoral controllers 66 in calling and answering units 2 and 4 use the same DPSK modulation scheme employed to exchange line probing data. All communication at this time between restoral controller 66 in calling and answering units 2 and 4 is via the dial line(s).

In both calling and answering units 2 and 4, restoral controller 66 constructs all commands and responses to be transmitted and passes them to signal processor 30 as raw data to be transmitted. All commands and responses received by signal processor 30 are passed along to restoral controller 66. The integrity of all commands and responses is verified using a cyclical redundancy check.

If the dial line(s) cannot support the selected data rate, then the restoral controller in the calling unit sends a command to answering unit 4 instructing it to drop the dial line(s). Restoral controller 66 in calling unit 2 then forces its restoral circuitry to drop the dial line(s). When the restoral controller in the answering unit receives this command, it will force its restoral circuitry to drop the dial line(s). After restoral controller 66 in calling unit 2 has forced its restoral circuitry to drop the dial line(s), it proceeds to re-establish the dial connection(s), using the steps and procedures described earlier, in an attempt to obtain dial connection(s) which can support the selected bit rate (i.e., it repeats steps 110 through 140).

In the case of dual line modulation modes when one dial line can support the selected bit rate but the other cannot, restoral controller 66 in calling unit 2 sends a command to answering unit 4 instructing it to drop the "Bad" line and hold the "Good" line. Upon reception of this command, restoral controller 66 in the answering unit 4 sends a response to calling unit 2 acknowledging receipt of the command and then forces its restoral circuitry to drop the "Bad" line and instructs its signal processor 30 to transmit a continuous answer back tone on the "Good" line (step 250). As long as answering unit 4 is sending energy over the "Good" line, the public switched telephone network will not switch channels due to its being inactive. Such channel switching, if permitted to happen, could result in a deterioration of line quality.

Restoral controller 66 in calling unit 2, upon receiving the acknowledgement from answering unit 4, forces its restoral circuitry to drop the "Bad" line and then takes steps to re-establish the line. Once the "Bad" line is re-established, the above-described dial line qualification procedures are repeated.

Upon determining that the dial line(s) can support the selected bit rate, calling unit 2 sends a command to answering unit 4 instructing it to switch its data transmission to the appropriate dial line(s). Upon receiving this command, restoral controller 66 in answering unit 4 sends a response to calling unit 2 acknowledging receipt of the command. After the acknowledgement has been sent, restoral controller 66 in answering unit 4 forces its restoral circuitry to switch the data transmission transmit and receive paths to the dial line(s) and the restoral circuitry's transmit and receive paths to the leased line(s) (step 260).

Upon receiving the acknowledgement from answering unit 4, restoral controller 66 in calling unit 2 also forces its restoral circuitry to perform the same switching as that just described for answering unit 4 (step 150). In the case of single line operation, however, prior to actual full duplex communication over the single line ranging and echo cancellation procedures must be invoked in order to train the echo cancellers (not shown) in both calling unit 2 and answering unit 4. If the selected modulation mode is defined by the industry standard V.32 protocol, then simply invoking that protocol takes care of these requirements.

After data transmission has been switched to the dial lines, restoral controllers 66 in both calling and answering units 2 and 4 access their respective modulation mode databases 62 to determine if the leased line modulation mode is a single or dual line modulation mode. In the case of dual line modulation modes, the restoral circuitry's transmit path is switched to transmit leased line 8 and the receive path is switched to receive leased line 10. In the case of single line modulation modes, both the transmit and receive paths are switched to leased line 8.

Once data transmission is occurring over the dial line(s), restoral controllers 66 in both calling and answering units 2 and 4 continuously probe the leased line(s) (step 160 in Fig. 3 and step 270 in Fig. 5). The line probing sequence employed for testing the leased line(s) is the same as that described earlier for qualifying the dial line(s).

All communication at this time between restoral controllers 66 in calling and answering units 2 and 4 is via the leased line(s). After each line probe sequence is complete, restoral controller 66 in calling unit 2 decides whether the leased line(s) are of sufficient quality to warrant termination of the restoral backup. When the leased line(s) are determined to be of sufficient quality, restoral controller 66 in calling unit 2 sends a command to answering unit 4 instructing it to switch data transmission back to the leased line(s).

Restoral controller 66 in answering unit 4 responds by sending an acknowledgement to calling unit 2 and forcing its restoral circuitry to switch the data transmission transmit and receive paths to leased line(s) and switch the restoral circuitry's transmit and receive paths to the dial line(s) (step 280). Upon receiving the acknowledgement from the answering unit, restoral controller 66 in calling unit 2 forces its restoral circuitry to perform the same switching (step 170).

After data transmission has been switched to the leased line(s), the particular PSTN channels used for dial line(s) are held by transmitting a DPSK carrier signal on the dial line(s) (steps 180 and 290). The dial line(s) are held for ten minutes. If during that time restoral controller 66 in calling unit 2 determines that leased line(s) conditions warrant a restoral backup, then restoral controller 66 sends a command to answering unit 4 over the dial line(s) instructing it to switch its main channel back to the dial line(s). Restoral controller 66 in answering unit 4 responds by acknowledging this command and switching its main channel to the dial line(s) and its restoral circuitry to the leased line(s).

Upon receiving the acknowledgement from answering unit 4, restoral controller 66 in calling unit 2 performs the same switching. If after ten minutes leased line(s) conditions do not warrant a restoral backup, then restoral controllers 66 in both calling and answering units 2 and 4 force their respective restoral circuitry to drop the dial line(s) (step 190 in Fig. 3 and step 300 in Fig.4).

Other embodiments are within the following claims.

## Claims

1.  A method for automatically switching data transmission paths between modems, wherein quality of transmission occurring on a first path of one or more first lines (8,10) has degraded, and transmission is to be switched to a second path of one or more second lines (12) having an ability to transmit at a predetermined bit rate, comprising the steps of:

    monitoring the quality of transmission of the first lines (8,10);
    deciding whether the quality of transmission on one or more of the first lines (8,10)is degraded such that it falls below a first standard;
    automatically establishing communication on the second lines (12) if the quality of transmission of one or more of the first lines (8,10) fails to meet the first standard;
    maintaining data transmission on said first lines (8,10) while establishing communication on the second lines (12);
    qualifying the second lines (12) by determining whether the quality of transmission of the lines (12) exceeds a second standard; and
    when the quality of transmission of the second lines (12) exceeds the second standard, automatically switching data transmission from the first lines (8,10) to the second lines (12)

characterised in that
falling below the first standard comprises one of:

(a) having loss of carrier for a predetermined period of time, or
(b) having a predetermined number of retrains/resynchronization sequences; and

wherein the second standard is said predetermined bit rate estimated on the basis of an analysis of a signal to noise ratio as a function of frequency over the spectrum of frequencies useful for data transmission.

2. The method of claim 1 wherein said first standard is a degree of degradation less than total loss of data transmission capability.

3. The method of claim 1 wherein communication is established on and data transmission is switched to a single second line (180, 150).

4. The method of claim 1 wherein communication is established on and data transmission is switched to a plurality of second lines (180, 150).

5. A system for automatically switching data transmission paths ( 6, 12 ) between modems ( 2, 4 ), wherein quality of transmission occurring on a first path of one or more first lines (8, 10 ) has degraded below a first standard, and transmission is to be automatically switched to a second path of one or more second lines ( 12 ) having an ability to transmit at a predetermined bit rate, the system comprising:

means ( 64 ) for monitoring the quality of transmission of the first lines;
means ( 64 ) for deciding whether the quality of transmission of the first lines (8,10) falls below a first standard;
means ( 64, 66 ) for automatically establishing communication on the second lines (12) if the quality of transmission of the first lines (8,10) fails to meet the first standard;
means ( 66 ) for maintaining data transmission on said first lines (8, 10 ) while establishing communication on the second lines (12);
means (66) for qualifying the second lines (12), prior to switching data transmission to the second lines (12), by determining whether the quality of transmission of the lines (12) exceeds a second standard; and
means (66) for switching data transmission from the first lines (8,10) to the second lines (12) when the quality of transmission of said second line or lines (12) exceeds a second standard characterised in that falling below the first standard comprises one of:

(a) having loss of carrier for a predetermined period of time, or;
(b) having a predetermined number of retrains/resynchronization sequences and

wherein the second standard is said predetermined bit rate estimated on the basis of an analysis of a signal to noise ratio as a function of frequency over the spectrum of frequencies useful for data transmission.

6. The system of claim 5 wherein said first standard is a degree of degradation less than total loss of data transmission capability.

7. The system of claim 5 wherein communication is established on and data transmission is switched to a single second line (12).

8. The system of claim 5 wherein communication is established on and data transmission is switched to a plurality of second lines (12).

**Patentansprüche**

1. Verfahren zum automatischen Umschalten des Datenübertragungspfads zwischen Modems, falls sich die Qualität der Übertragung auf einem ersten Pfad über eine oder mehrere erste Leitungen (8,10) verschlechtert hat und die Übertragung auf einen zweiten Pfad über eine oder mehrere zweite Leitungen (12) umgeschaltet werden muß, die mit einer vorgegebenen Bit-Übertragungsgeschwindigkeit übertragen können, das die Schritte umfaßt:

überwachen der Qualität der Übertragung über die ersten Leitungen (8,10),

Entscheiden, ob sich die Qualität der Übertragung über eine oder mehrere der ersten Leitungen (8,10) verschlechtert hat, so daß sie unter eine erste Grenze absinkt,

automatisches Einrichten der Nachrichtenübertragung über die zweiten Leitungen (12), wenn die Qualität der Übertragung über eine oder mehrere der ersten Leitungen (8,10) die erste Grenze nicht erreicht,

Beibehalten der Datenübertragung über die ersten Leitungen (8,10), während die Nachrichtenübertragung auf den zweiten Leitungen (12) aufgebaut wird,

Bewerten der zweiten Leitungen (12) durch das Bestimmen, ob die Qualität der Übertragung über die Leitungen (12) eine zweite Grenze übersteigt, und

automatisches Umschalten der Datenübertragung von den ersten Leitungen (8,10) zu den zweiten Leitungen (12), wenn die Qualität der Übertragung über die zweiten Leitungen (12) die zweite Grenze übersteigt,

dadurch gekennzeichnet, daß
das Fallen unter die erste Grenze umfaßt:

(a) den Verlust des Trägers für eine vorgegebene Zeitdauer oder

(b) eine vorgegebene Anzahl von Retrain-/ Resynchronisations-Sequenzen,

wobei die zweite Grenze die vorgegebene Bit- Übertragungsgeschwindigkeit ist, die auf der Grundlage einer Analyse des Rauschabstands als Funktion der Frequenz in dem für die Datenübertragung nützlichen Frequenzspektrum abgeschätzt wird.

2. Verfahren nach Anspruch 1, wobei die erste Grenze ein Grad der Verschlechterung unterhalb des vollständigen Verlustes der Fähigkeit zur Datenübertragung ist.

3. Verfahren nach Anspruch 1, wobei die Nachrichtenübertragung auf einer einzigen zweiten Leitung eingerichtet und die Datenübertragung dahin umgeschaltet wird (180, 150).

4. Verfahren nach Anspruch 1, wobei die Nachrichtenübertragung auf mehreren zweiten Leitungen eingerichtet und die Datenübertragung dahin umgeschaltet wird (180, 150).

5. System zum automatischen Umschalten der Datenübertragungspfade (6, 12) zwischen Modems (2, 4), wobei die Qualität der Übertragung über einen ersten Pfad mit einer oder mehreren ersten Leitungen (8, 10) sich unter eine erste Grenze verschlechtert hat und die Übertragung automatisch zu einem zweiten Pfad mit einer oder mehreren zweiten Leitungen (12) umgeschaltet werden muß, die mit einer vorgegebenen Bit-Übertragungsgeschwindigkeit übertragen können, wobei das System umfaßt:

ein Mittel (64) zum Überwachen der Qualität der Übertragung über die ersten Leitungen,

ein Mittel (64) zum Entscheiden, ob die Qualität der Übertragung über die ersten Leitungen (8,10) unter eine erste Grenze absinkt,

ein Mittel (64, 66) zum automatischen Aufbau einer Nachrichtenübertragung über die zweiten Leitungen (12), wenn die Qualität der Übertragung über die ersten Leitungen (8,10) nicht die erste Grenze erreicht,

ein Mittel (66) zum Beibehalten der Datenübertragung über die ersten Leitungen (8, 10), während die Nachrichtenübertragung über die zweiten Leitungen (12) aufgebaut wird,

ein Mittel (66) zum Bewerten der zweiten Leitungen (12) vor dem Umschalten der Datenübertragung zu den zweiten Leitungen (12) durch Bestimmen, ob die Qualität der Übertragung über die Leitungen (12) eine zweite Grenze übersteigt, und

ein Mittel (66) zum Umschalten der Datenübertragung von den ersten Leitungen (8, 10) zu den zweiten Leitungen (12), wenn die Qualität der Übertragung über die zweite Leitung oder die zweiten Leitungen (12) eine zweite Grenze übersteigt,

dadurch gekennzeichnet, daß
das Fallen unter die erste Grenze umfaßt:

(a) den Verlust des Trägers für eine vorgegebene Zeitdauer oder

(b) eine vorgegebenen Anzahl von Retrain-/ Resynchronisations-Sequenzen,

wobei die zweite Grenze die vorgegebene Bit- Übertragungsgeschwindigkeit ist, die auf der Grundlage einer Analyse des Rauschabstands als Funktion der Frequenz in dem für die Datenübertragung nützlichen Frequenzspektrum abgeschätzt wird.

6. System nach Anspruch 5, wobei die erste Grenze ein Grad der Verschlechterung unterhalb des vollständigen Verlustes der Fähigkeit zur Datenübertragung ist.

7. System nach Anspruch 5, wobei die Nachrichtenübertragung über eine einzelne zweite Leitung (12) eingerichtet und die Datenübertragung dahin umgeschaltet wird.

8. System nach Anspruch 5, wobei die Nachrichtenübertragung auf mehreren zweiten Leitungen (12) eingerichtet und die Datenübertragung dahin umgeschaltet wird.

## Revendications

1. Procédé permettant de commuter automatiquement des voies de transmission de données entre des modems, dans lequel la qualité de la transmission se produisant sur une première voie de l'une ou plusieurs des premières lignes (8, 10) s'est détériorée, et la transmission doit être commutée sur une deuxième voie d'une ou plusieurs deuxième lignes (12) ayant la capacité d'effectuer une transmission à un débit binaire prédéterminé, comprenant les étapes consistant à :

surveiller la qualité de la transmission de première ligne (8, 10) ;
décider si la qualité de la transmission de l'une ou plusieurs des premières lignes (8, 10) est détériorée de sorte qu'elle se trouve en dessous d'une première norme ;
établir automatiquement une communication sur les deuxièmes lignes (12), si la qualité de transmission d'une ou plusieurs des premières lignes (8, 10) n'arrive pas à respecter la première norme ;
maintenir la transmission de données sur lesdites premières lignes (8, 10) tout en établissant une communication sur les deuxièmes lignes (12) ;
qualifier les deuxièmes lignes (12) en déterminant si la qualité de la transmission des lignes (12) est supérieure à une deuxième norme ; et
lorsque la qualité de la transmission des deuxièmes lignes (12) dépasse la deuxième norme, commuter automatiquement la transmission de données des premières lignes (8, 10) sur les deuxièmes lignes (12)

caractérisé en ce que, si elle se trouve en dessous de la première norme, l'une des choses suivantes se produit :

(a) une perte de porteuse pendant une période de temps prédéterminée, ou
(b) un nombre prédéterminé de séquences de resynchronisation/recalage est effectué ; et

dans lequel la deuxième norme correspond audit débit binaire prédéterminé estimé sur la base de l'analyse d'un rapport signal/bruit en fonction de la fréquence sur le spectre de fréquences utile pour la transmission de données.

2. Procédé selon la revendication 1, dans lequel ladite première norme correspond à un degré de détérioration inférieure à la perte totale de la capacité de transmission de données.

**3.** Procédé selon la revendication 1, dans lequel la communication est établie et la transmission de données est commutée sur une deuxième ligne unique (180, 150).

**4.** Procédé selon la revendication 1, dans lequel la communication est établie et la transmission de données est commutée sur une pluralité de deuxièmes lignes (180, 150).

**5.** Système permettant de commuter automatiquement des voies de transmission de données (6, 12) entre des modems (2, 4), dans lequel la qualité de transmission se produisant sur une première voie de l'une ou plusieurs des premières lignes (8, 10) se détériore lorsqu'elle tombe en dessous d'une première norme, et la transmission doit être automatiquement commutée sur une deuxième voie de l'une ou plusieurs des deuxièmes lignes (12) ayant la capacité d'effectuer une transmission à un débit binaire prédéterminé, le système comprenant :

un moyen (64) permettant de surveiller la qualité de transmission des premières lignes ;
un moyen (64) permettant de décider si la qualité de transmission des premières lignes (8, 10) est inférieure à une première norme ;
un moyen (64, 66) permettant d'établir automatiquement une communication sur les deuxièmes lignes (12) si la qualité de transmission des premières lignes (8, 10) n'arrive pas à répondre à la première norme ;
un moyen (66) permettant de maintenir la transmission de données sur lesdites premières lignes (8, 10) tout en établissant une communication sur les deuxièmes lignes (12) ;
un moyen (66) permettant de qualifier les deuxièmes lignes (12), avant la commutation de la transmission de données sur les deuxièmes lignes (12), en déterminant si la qualité de transmission des lignes (12) est supérieure à une deuxième norme ; et
un moyen (66) permettant de commuter la transmission de données des premières lignes (8, 10) sur les deuxièmes lignes (12) lorsque la qualité de transmission de ladite deuxième ligne ou desdites deuxièmes lignes (12) est supérieure à une deuxième norme caractérisée en ce que, si elle est inférieure à la première norme, l'une des choses suivantes se produit :

(a) une perte de porteuse pendant une période de temps prédéterminée, ou
(b) un nombre prédéterminé de séquences de resynchronisation/recalage est effectué ; et

dans lequel la deuxième norme correspond audit débit binaire prédéterminé estimé sur la base de l'analyse d'un rapport signal/bruit en fonction de la fréquence sur le spectre de fréquences utile pour la transmission de données.

**6.** Système selon la revendication 5, dans lequel ladite première norme correspond à un degré de dégradation inférieur à la perte totale de la capacité de transmission de données.

**7.** Système selon la revendication 5, dans lequel la communication est établie et la transmission de données est commutée sur une deuxième ligne unique (12).

**8.** Système selon la revendication 5, dans lequel la communication est établie et la transmission de données est commutée sur une pluralité de deuxièmes lignes (12).

FIG.1

**FIG.2**

EP 0 509 037 B1

**FIG.3**

*FIG.4*